# FASCICULE DE BREVET EUROPEEN

(11) **EP 4 680 528 B1**
(45) Date de publication et mention de la délivrance du brevet: **11.11.2026**
(21) Numéro de dépôt: 24718560.6
(22) Date de dépôt: 13.03.2024
(51) Int. Cl.: B64C 25/54, B64C 25/56

(54) **SYSTÈME DE FLOTTABILITÉ D'UN AÉRONEF COMPRENANT DES MOYENS DE STABILISATION AU ROULIS**
AUFTRIEBSSYSTEM FÜR EIN LUFTFAHRZEUG MIT MITTELN ZUR ROLLSTABILISIERUNG
AIRCRAFT FLOATATION SYSTEM COMPRISING ROLL STABILIZATION MEANS

(30) Priorité: 17.03.2023 FR 2302524
(43) Date de publication de la demande: 21.01.2026
(73) Titulaire: Safran Aerosystems, 78370 Plaisir (FR)
(72) Inventeur: VAN-THIEL, Eric, 77550 MOISSY CRAMAYEL (FR)
(74) Mandataire: Casalonga
(86) Numéro de dépôt international: PCT/FR2024/050301
(87) Numéro de publication internationale: WO 2024/194553

(56) Documents cités:
- US-A- 3 240 449
- US-A1- 2015 360 758
- US-A1- 2018 305 040
- US-B1- 7 309 267

## Description

### Domaine technique

L'invention concerne le domaine technique des systèmes de flottabilité permettant un amerrissage et une stabilité à flot d'un appareil de transport, notamment un aéronef, et plus particulièrement un aéronef à voilure tournante, tel qu'un hélicoptère.

### Techniques antérieures

Tout aéronef destiné à transporter des personnes en zones maritimes doit être équipé d'un système de flottabilité permettant, en cas d'amerrissage d'urgence, d'assurer une flottaison suffisante pour permettre une évacuation des personnes de l'aéronef.

Des règlements de certification précisent qu'un aéronef doit pouvoir amerrir et être stable sur l'eau avec un tel système de flottabilité. Une stabilité de l'aéronef doit être avérée pour des états de surface libre de l'eau qui sont définis dans les règlements de certification par le biais de paramètres, tels qu'une hauteur et une période des vagues.

Les états de surface libre de l'eau, ou « conditions de mer », également dénommés par les termes « sea conditions » en anglais, s'appliquent à toute surface liquide.

Le terme « amerrissage » couvre aussi le cas d'un aéronef se posant, notamment de manière contrôlée, sur toute surface libre d'eau, que ce soit sur une mer, un océan ou un lac par exemple.

Une évolution du contexte normatif a durci le niveau d'exigences pour certaines vérifications. Ainsi, les normes CS27 et CS 29 Amendement 5 imposent une vérification de stabilité face à une houle irrégulière. Auparavant, il suffisait de vérifier la stabilité face à une houle régulière.

En suivant les normes actuelles, les système de flottabilité existants risquent d'avoir des niveaux de certification plus bas que ceux obtenus en application des anciennes normes. US 2015/360758, US 2018/305040, US 3 240 449, US 7309267 divulguent l'état de la technique.

### Exposé de l'invention

Au vu de ce qui précède, l'invention a pour but d'améliorer une stabilité d'un aéronef en cas d'amerrissage.

La présente invention a pour objet un système de flottabilité, destiné à être relié à une structure d'un aéronef et apte à assurer la flottabilité de l'aéronef sur une surface d'eau, comprenant des moyens de stabilisation au roulis comprenant au moins un tapis flottant, destiné à être déployé sur une surface d'eau pour diminuer un mouvement de roulis de l'aéronef.

La présence du tapis flottant a pour effet de stabiliser l'aéronef face au roulis de l'aéronef. Le système de flottabilité proposé permet d'augmenter considérablement un travail mécanique nécessaire au retournement de l'aéronef.

Selon l'invention, le tapis flottant est apte à être relié directement à la structure de l'aéronef et/ou indirectement, notamment à travers le flotteur. Plus particulièrement, le tapis flottant est associé à au moins un flotteur du système de flottabilité, notamment au moins un flotteur gonflable.

De plus, le système de flottabilité peut comprendre un dispositif de déploiement apte à permettre le déploiement d'éléments intégrés au système de flottabilité en cas d'amerrissage.

De plus, le tapis flottant peut être disposé d'un côté distal du flotteur.

Par ailleurs, le tapis flottant peut présenter une souplesse de sorte à permettre au tapis flottant de suivre une forme de la surface d'eau.

Le tapis flottant peut être muni de moyens de traînée, destinés à permettre une augmentation d'une force de traînée par rapport à l'eau.

Selon une caractéristique additionnelle, les moyens d'augmentation de traînée comprennent au moins une poche à eau et/ou une ancre flottante.

Selon une autre caractéristique additionnelle et/ou complémentaire, les moyens de stabilisation comprennent au moins un radeau gonflable et dans lequel le tapis flottant est au moins un élément constitutif du radeau.

Selon un autre aspect, l'invention a pour objet un aéronef équipé d'un système de flottabilité tel que décrit précédemment.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] est une vue en perspective d'un aéronef selon l'invention ;
[Fig 2] est une vue schématique de face d'un aéronef muni d'un système de flottabilité selon l'invention ; et
[Fig 3] est un graphique présentant l'effet de stabilisation au mouvement de roulis selon l'invention.

### Exposé détaillé d'au moins un mode de réalisation

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

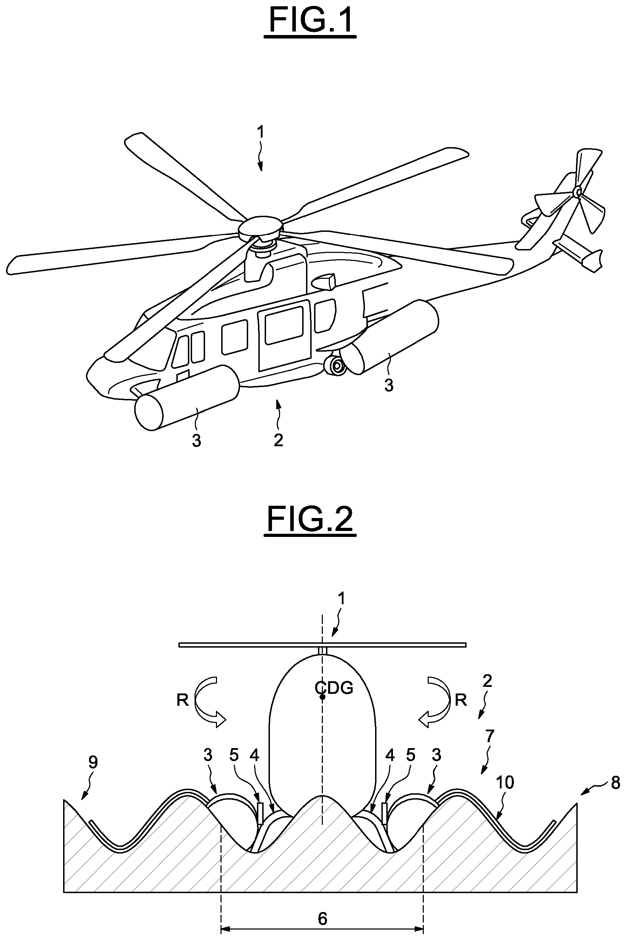

La figure 1 présente une vue en perspective d'un aéronef 1 selon l'invention. L'aéronef 1 est pourvu d'un système de flottabilité 2 selon l'invention afin de pouvoir flotter sur l'eau en cas d'amerrissage.

Un tel système de flottabilité 2 est pourvu d'au moins un flotteur 3, notamment d'au moins deux flotteurs 3, notamment agencés de part et d'autre d'un fuselage de l'aéronef 1.

En particulier, les flotteurs 3 peuvent être appariés. Dès lors, les flotteurs 3 d'une même paire peuvent être disposés symétriquement de part et d'autre d'un plan antéropostérieur de symétrie de l'aéronef 1.

Le système de flottabilité 2 peut comprendre aussi un dispositif de déploiement (non représenté), apte à permettre le déploiement d'éléments intégrés au système de flottabilité 2.

Le dispositif de déploiement peut comprendre un moyen de gonflage, apte à gonfler des éléments gonflables du système de flottabilité 2. Le moyen de gonflage peut, par exemple, être de nature chimique ou électrique. A cet effet, le flotteur 3 peut être un flotteur gonflable.

En dehors d'une phase d'amerrissage, le flotteur 3 peut être plié dans un compartiment de l'aéronef 1. Lors de la phase d'amerrissage, le flotteur 3 est déployé, par exemple gonflé, par le dispositif de déploiement du système de flottabilité 2.

Le flotteur 3 est apte à être gonflé en vol préalablement à l'amerrissage, ou après l'amerrissage.

La figure 2 est une vue schématique de face de l'aéronef 1 muni du système de flottabilité 2 selon l'invention. En particulier, l'aéronef 1 est muni d'au moins un flotteur 3, notamment d'au moins deux flotteur 3 agencés de part et d'autre du fuselage de l'aéronef 1.

Le système de flottabilité 2, en particulier le flotteur 3, est lié à une structure 4 de l'aéronef 1 par un dispositif de liaison 5.

En cas d'amerrissage sur une mer agitée, l'aéronef 1 peut s'incliner en présentant un angle de roulis, correspondant à un angle entre une direction verticale et le plan de symétrie antéropostérieur de l'aéronef 1.

Tant que l'angle de roulis est inférieur à un seuil déterminé, l'aéronef 1 n'est pas susceptible de se retourner.

L'aéronef 1 peut notamment se retourner lorsque le centre de gravité CDG de l'aéronef ne surplombe plus un espace de flottaison 6, notamment compris entre deux flotteurs 3 disposés de part et d'autre du fuselage de l'aéronef 1. Pour réduire le risque de retournement de l'aéronef 1, le système de flottabilité 2 comprend des moyens de stabilisation 7 à un mouvement de roulis R de l'aéronef 1.

Le mouvement de roulis R de l'aéronef 1 peut, par exemple, être causé par des vagues d'une houle 8 formée sur une surface d'eau 9 sur laquelle est posé l'aéronef 1.

Selon un mode de réalisation, les moyens de stabilisation 7 comprennent au moins un tapis flottant 10.

Le tapis flottant 10 est destiné à être déployé sur la surface d'eau 9 en cas d'amerrissage. Le déploiement du tapis flottant 10 est soit commandé, soit déclenché automatiquement, notamment par une détection d'immersion. Lorsque le déploiement du tapis flottant 10 est commandé, il est réalisé, de préférence, après l'amerrissage. Il reste néanmoins possible de déployer le tapis flottants 10 avant l'amerrissage. De même, lorsque le déploiement du tapis flottant 10 est déclenché automatiquement, il est réalisé, en particulier, après l'amerrissage.

Le tapis flottant 10 est réalisé dans un matériau de masse volumique inférieur à l'eau, tels que par exemple du plastique ou textile.

Le tapis flottant 10 est relié à la structure 4 de l'aéronef soit directement, soit indirectement, notamment à travers le flotteurs 3.

Dans le mode de réalisation illustré en figure 2, le système de flottabilité 2 comprend au moins deux flotteurs 3 agencés de part et d'autre du fuselage de l'aéronef 1. Préférentiellement, le système de flottabilité 2 comprend autant de tapis flottants 10 que de flotteurs 3.

Ainsi, plus particulièrement, le tapis flottant 10 est associé au flotteur 3. Notamment, le tapis flottant 10 est disposé sur un côté distal du flotteur 3 associé.

Dans un tel mode de réalisation, le tapis flottant 10 est relié indirectement à la structure 4 de l'aéronef 1 à travers les flotteurs 3.

Dans divers modes de réalisation, le tapis flottant 10 peut être lacé, cousu et/ou collé au flotteur 3. Il est également possible qu'un tapis flottant 10 et un flotteur 3 associé constituent un corps monobloc.

Le tapis flottant 10 a pour but de faire diminuer le mouvement de roulis R de l'aéronef 1.

La présence du tapis flottant 10 sur la surface de l'eau 9 permet de créer des forces stabilisatrices s'opposant au mouvement de roulis R lorsque le tapis flottant 10 se déplace sur la surface de l'eau 9.

Le tapis flottant 10 contribue à créer un effet de stabilisation. L'effet de stabilisation est notamment dû à une force de traînée et aux efforts générés par une tension superficielle entre la surface de l'eau 9 et le tapis flottant 10.

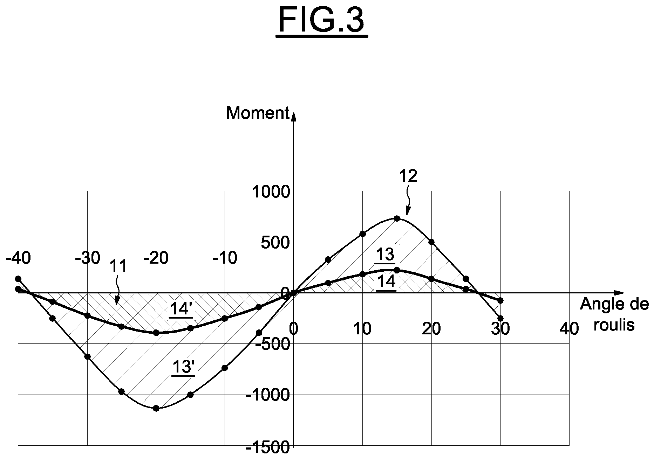

La figure 3 illustre un graphique présentant l'effet de stabilisation au mouvement de roulis R selon l'invention. L'effet de stabilisation est dû à la présence du tapis flottant 10.

Sur le graphique de la figure 3, un angle de roulis est représenté en abscisse. L'angle de roulis est obtenu sous une sollicitation d'un moment représenté en ordonnée.

L'origine du graphique de la figure 3 correspond à l'angle de roulis nul et au moment sollicitant nul.

Plus spécifiquement, le graphique de la figure 3 présente :
- une première courbe 11 montrant une évolution de l'angle de roulis R dans une configuration ne comprenant pas de tapis flottants 10 ; et
- une deuxième courbe 12 montrant une évolution de l'angle de roulis R dans une configuration comprenant au moins un tapis flottant 10.

L'effet de stabilisation du tapis flottant 10, en particulier des tapis flottants 10, est mis en évidence par des valeurs de moment sollicitant plus élevées en valeur absolue de la deuxième courbe 12 par rapport aux valeurs correspondantes de la première courbe 11.

Ainsi, à angle de roulis R égal, il est nécessaire de fournir un moment sollicitant plus élevé en présence de tapis flottants 10.

L'effet de stabilisation du tapis flottant 10 est évident lorsque l'on considère un travail mécanique nécessaire au retournement de l'aéronef 1. Le travail mécanique nécessaire au retournement de l'aéronef 1 correspond à l'aire comprise entre la première courbe 11 et la deuxième courbe 12 et l'abscisse, depuis l'origine et jusqu'à l'angle de retournement.

Par exemple, les aires 13 et 13' sous la deuxième courbe 12 sont respectivement nettement supérieures aux aires 14 et 14' sous la première courbe 11. Ainsi, la présence de tapis flottants 10 permet d'augmenter considérablement le travail mécanique nécessaire au retournement de l'aéronef 1.

L'angle de retournement correspond à l'intersection de la première courbe 11 et de la deuxième courbe 12 avec l'abscisse et représente un point d'instabilité pour l'équilibre de l'aéronef 1.

Sur la figure 3, on constate que la présence de tapis flottants 10 n'a pas d'incidence sur l'angle de retournement. Celui-ci correspond à des mêmes valeurs pour la première courbe 11 et la deuxième courbe 12, à savoir, selon l'exemple présenté environ +27° dans la partie positive et -37° dans la partie négative.

Pour accroître encore l'effet de stabilisation, le tapis flottant 10 peut être muni de moyens de traînée, destinés à permettre une augmentation d'une force de traînée par rapport à l'eau.

Par exemple, le tapis flottant 10 peut avoir des formes et/ou des parties gonflables pour retenir de l'eau et/ou augmenter un coefficient de traînée, de manière à augmenter un effort nécessaire à un déplacement du tapis flottant 10 par rapport à l'eau.

Dans un mode de réalisation non représenté, les moyens de traînée comprennent une ancre flottante et/ou au moins une poche à eau.

Afin de maximiser les efforts générés par la tension superficielle, le tapis flottant 10 présente une souplesse de sorte à permettre au tapis flottant 10 de suivre une forme de la surface d'eau 9. Ainsi, le tapis flottant 10 est apte à se déformer pour épouser la surface d'eau 9.

Dans un mode de réalisation non représenté, les moyens de stabilisation 7 comprennent au moins un radeau, notamment un radeau gonflable. Dans une telle configuration, le tapis flottant 10 tel que décrit précédemment est apte à être au moins un élément constitutif du radeau, en particulier un fond du radeau. Ainsi, le radeau participe à l'effet de stabilisation au mouvement de roulis R de l'aéronef 1. Le tapis flottant 10 qui fait partie du fond du radeau est détachable du flotteur 3 qui lui est associé et/ou de l'aéronef 1.

En particulier, le flotteur 3, le tapis flottant 10 et/ou le radeau constitue(nt) les éléments intégrés au système de flottabilité 2, apte(s) à être déployé(s) par le dispositif de déploiement du système de flottabilité 2.

Dans la présentation détaillée de l'invention, les termes utilisés ne doivent pas être considérés comme limitant l'invention aux modes de réalisation exposés, mais doivent être interprétés pour y inclure tous les équivalents dont la prévision est à la portée de l'homme de l'art en appliquant ses connaissances générales à la mise en œuvre de l'enseignement qui vient de lui être divulgué.

Bien évidemment, l'invention n'est pas limitée aux modes de réalisation décrits précédemment et fournis uniquement à titre d'exemple. Les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

De plus, l'invention englobe diverses modifications, formes alternatives et autres variantes que pourra envisager l'homme du métier dans le cadre exposé.

## Revendications

1. Système de flottabilité (2), destiné à être relié à une structure (4) d'un aéronef (1), **caractérisé en ce qu'**il comprend des moyens de stabilisation (7) au roulis (R) comprenant au moins un tapis flottant (10), destiné à être déployé sur une surface d'eau (9) pour diminuer un mouvement de roulis (R) de l'aéronef (1).

2. Système de flottabilité (2) selon la revendication 1, dans lequel le tapis flottant (10) est associé à au moins un flotteur (3) du système de flottabilité (2).

3. Système de flottabilité (2) selon la revendication 2, dans lequel le tapis flottant (10) est disposé d'un côté distal du flotteur (3).

4. Système de flottabilité (2) selon l'une quelconque des revendications 1 à 3, dans lequel le tapis flottant (10) présente une souplesse de sorte à permettre au tapis flottant (10) de suivre une forme de la surface d'eau (9).

5. Système de flottabilité (2) selon l'une quelconque des revendications 1 à 4, dans lequel le tapis flottant (10) est muni de moyens de traînée destinés à permettre une augmentation d'une force de traînée par rapport à l'eau.

6. Système de flottabilité (2) selon la revendication 5, dans lequel les moyens de traînée comprennent au moins une poche à eau et/ou une ancre flottante.

7. Système de flottabilité (2) selon l'une quelconque des revendications 1 à 6, dans lequel les moyens de stabilisation (7) comprennent au moins un radeau gonflable et dans lequel le tapis flottant (10) est au moins un élément constitutif du radeau.

8. Aéronef (1) équipé d'un système de flottabilité (2) selon l'une quelconque des revendications 1 à 7.

## Patentansprüche

1. Auftriebssystem (2), das dazu bestimmt ist, mit einer Struktur (4) eines Luftfahrzeugs (1) verbunden zu werden, **dadurch gekennzeichnet, dass** es Mittel zu der Stabilisierung (7) bei dem Rollen (R) umfasst, die mindestens eine Schwimmmatte (10) umfassen, die dazu bestimmt ist, auf einer Wasseroberfläche (9) entfaltet zu werden, um eine Rollbewegung (R) des Luftfahrzeugs (1) zu verringern.

2. Auftriebssystem (2) nach Anspruch 1, wobei die Schwimmmatte (10) mit mindestens einem Auftriebskörper (3) des Auftriebssystems (2) verbunden ist.

3. Auftriebssystem (2) nach Anspruch 2, wobei die Schwimmmatte (10) an einer distalen Seite des Auftriebskörpers (3) angeordnet ist.

4. Auftriebssystem (2) nach einem der Ansprüche 1 bis 3, wobei die Schwimmmatte (10) eine Flexibilität aufweist, sodass die Schwimmmatte (10) sich einer Form der Wasseroberfläche (9) anpassen kann.

5. Auftriebssystem (2) nach einem der Ansprüche 1 bis 4, wobei die Schwimmmatte (10) mit Widerstandsmitteln versehen ist, die eine Erhöhung einer Widerstandskraft gegenüber dem Wasser ermöglichen.

6. Auftriebssystem (2) nach Anspruch 5, wobei die Widerstandsmittel mindestens eine Wasserblase und/oder einen Treibanker umfassen.

7. Auftriebssystem (2) nach einem der Ansprüche 1 bis 6, wobei die Stabilisierungsmittel (7) mindestens ein aufblasbares Floß umfassen und wobei die Schwimmmatte (10) mindestens ein Bestandteil des Floßes ist.

8. Luftfahrzeug (1), das mit einem Auftriebssystem (2) nach einem der Ansprüche 1 bis 7 ausgestattet ist.

## Claims

1. Buoyancy system (2), intended to be connected to a structure (4) of an aircraft (1), **characterized in that** it comprises roll (R) stabilization means (7) comprising at least one floating mat (10), intended to be deployed on a water surface (9) to reduce a roll movement (R) of the aircraft (1).

2. Buoyancy system (2) according to claim 1, wherein the floating mat (10) is associated with at least one float (3) of the buoyancy system (2).

3. Buoyancy system (2) according to claim 2, wherein the floating mat (10) is arranged on a distal side of the float (3).

4. Buoyancy system (2) according to any one of claims 1 to 3, wherein the floating mat (10) is flexible so as to allow the floating mat (10) to conform to the shape of the water surface (9).

5. Buoyancy system (2) according to any one of claims 1 to 4, wherein the floating mat (10) is provided with drag means intended to allow an increase in drag force relative to the water.

6. Buoyancy system (2) according to claim 5, wherein the drag means comprise at least one water pocket and/or a floating anchor.

7. Buoyancy system (2) according to any one of claims 1 to 6, wherein the stabilization means (7) comprise at least one inflatable raft and wherein the floating mat (10) is at least one component of the raft.

8. Aircraft (1) equipped with a buoyancy system (2) according to any one of claims 1 to 7.
